**Europäisches Patentamt**

**European Patent Office**

**Office européen des brevets**

(19)

(11) Publication number: **0 444 876 A2**

## (12) EUROPEAN PATENT APPLICATION

(21) Application number: **91301538.4**

(22) Date of filing: **26.02.91**

(51) Int. Cl.⁵: **A47B 57/56, B65G 1/02**

(30) Priority: **28.02.90 GB 9004531**

(43) Date of publication of application:
**04.09.91 Bulletin 91/36**

(84) Designated Contracting States:
**AT BE CH DE DK ES FR GR IT LI LU NL SE**

(71) Applicant: **Wilson, John**
**Terra Nova, Green Lane**
**Pamber Green, Basingstoke, Hants. (GB)**
Applicant: **Jones, Norman Charles**
**1 Woodford Road**
**Hall Green, Birmingham (GB)**

(72) Inventor: **Wilson, Martin**
**9 Rake End**
**Hill Ridware, Nr. Rugeley, Staffs. (GB)**

(74) Representative: **Waite, Anthony William et al**
**MARKS & CLERK Alpha Tower Suffolk Street**
**Queensway**
**Birmingham B1 1TT (GB)**

(54) **Load support system.**

(57) A load support system has a generally horizontal support arm (5) connected to an upright (1A, 1B) by connecting means (6). The connecting means includes a first part (13, 14) arranged to engage a first surface (21) of the upright, and a wedge component (17) movable to engage between a second surface of the upright opposed to said first surface and a surface (18) fixed relative to the support arm such as to effect a wedge action between the second and fixed surfaces to lock the arm firmly on the upright.

EP 0 444 876 A2

FIG 1

FIG 1A

FIG 1B

FIG 4

## LOAD SUPPORT SYSTEM

This invention relates to a load support system, primarily for use as storage racking in warehouses and similar locations, and of the general kind in which a generally horizontal support arm is connected to an upright by way of connecting means which permits connection of the arm at any desired location along the upright.

Some prior proposals of this general kind employ an arm formed by a pair of parallel arm members interconnected at one pair of ends and connected respectively to opposed longitudinal flanges of an upright, the assembly relying, when not under load, upon friction and jamming of the arm on the upright to hold it in position on the latter, and/or upon canting of the arm members by tightening of a screw clamping device to wedge the arm members on the flanges. Such arrangements having composite arms can be difficult for one person to assemble single-handed and their effectiveness, in use, can deteriorate as a result of wearing and distortion of the interfitting parts of the upright flanges and arm connecting devices.

An object of the invention is to provide an improved load support system in which the aforesaid drawbacks are minimised or avoided.

According to the invention, a load support system of the aforesaid general kind has a connecting means comprising a first part arranged to engage a first surface of the upright, and a second part movable to engage between a second surface of the upright opposed to said first surface and a surface fixed relative to the arm, such as to effect a wedge action between said second and fixed surfaces to lock the arm firmly on the upright.

In one convenient arrangement, said second part is a separate wedge component which is movable into and out of a wedging position, preferably by a drive device which may conveniently be in the form of a screw connection between the wedge and a part of the arm. Typically, the wedge is dimensioned so that, when in its wedging position, it extends downwardly along the second surface of the upright to a position substantially below the underside of the connected arm.

Preferably, a portion of said first part of the connecting means is movable relative to the remainder thereof to facilitate engagement of the connecting means with said first surface of the upright. Conveniently, said portion is pivotally attached to the arm for swinging movement into and out of its engaging position relative to said first surface.

From another aspect of the invention, a load support system of the aforesaid general kind has an elongate ground-engaging member secured to the lower end portion of the upright, the upright being provided with mutually perpendicular surfaces respectively in planes extending along the upright, means being provided to connect the upright and said member together with corresponding surfaces on said member engaged with said at least two surfaces of the upright.

One of the mutually perpendicular surfaces is conveniently on a cleat extending from a front surface of the upright in a direction longitudinally of the ground engaging member, part of said front surface serving as the other of said mutually perpendicular surfaces and being engaged by a further cleat extending transversely of said member, preferably flush with the adjacent end of the latter.

The invention will now be described, by way of example, with reference to the accompanying drawings in which:-

Figure 1 is a perspective view of one form of load support system of the invention;

Figure 1A is an enlarged fragmentary view of a left-hand part of the system of Figure 1 viewed in the direction of arrow A;

Figure 1B is a view similar to Figure 1A of a right-hand part of the system of Figure 1 viewed in the direction of arrow B;

Figure 2 is a fragmentary cross-section along the line 2-2 of Figure 1B;

Figure 3 is an exploded view of the inner end of a load support arm of the system of Figure 1;

Figure 4 is a view from above illustrating the connection of a support arm to an upright;

Figure 5 is a perspective view, partly broken away, of a connection between an arm and upright;

Figure 6 illustrates an outer end portion of a support arm of the system incorporating stop means, and

Figure 7 is a view similar to Figure 6 illustrating an alternative form of stop means.

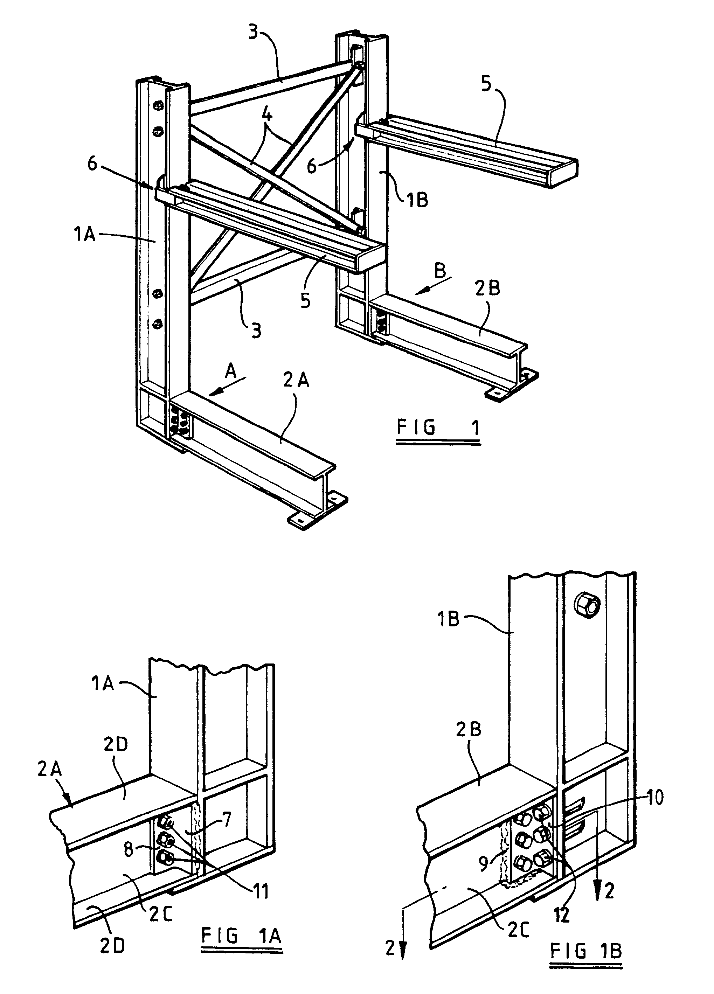

The load support system of the invention illustrated in Figure 1 is intended for use in supporting elongate loads such as bars and rods, which require support at two or more spaced locations. The system has a pair of uprights 1A, 1B, to the respective lower ends of which are secured perpendicularly extending parallel ground engaging members 2A, 2B. The uprights 1A, 1B are braced transversely by horizontal bracing members 3 and diagonal intersecting bracing members 4 to increase the rigidity of the structure. Each upright also has a load-bearing arm 5 connected thereto by means, illustrated generally at 6, which enable the positions of the arms on the uprights to be infinitely variable. As shown, the arms 5 are mounted at the same height on their respective uprights and this would be the most common configuration of use, although they may be mounted at different heights, if desired.

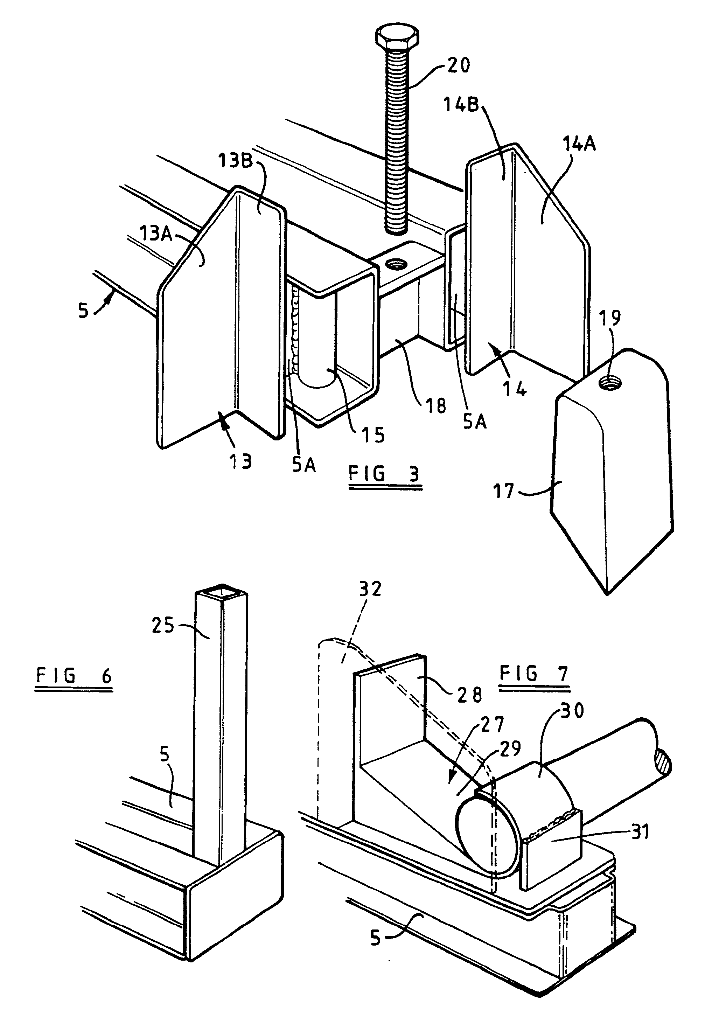

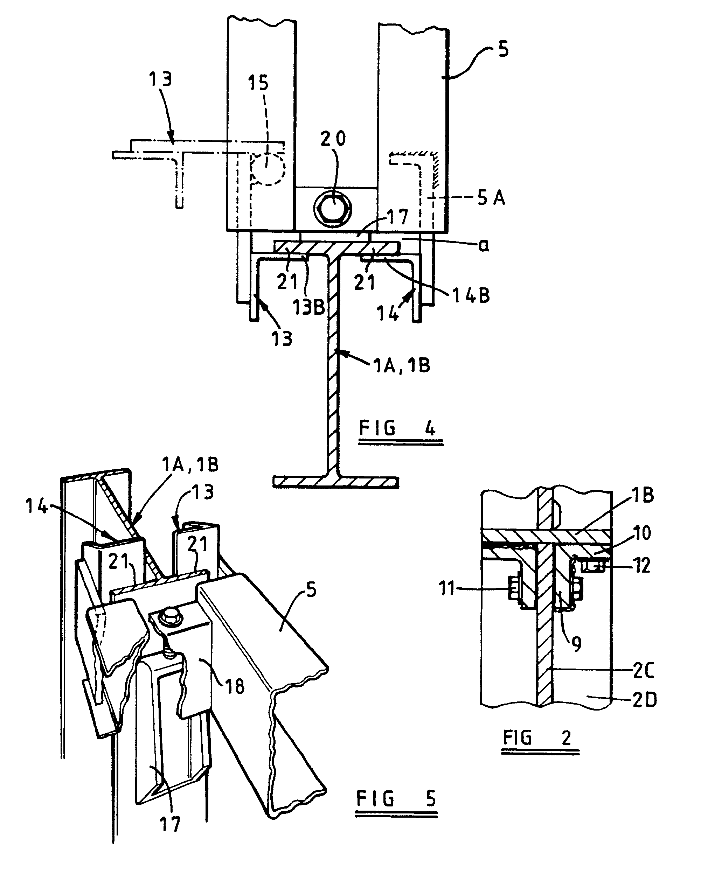

Figures 1A and 1B illustrate a preferred way of connecting the load bearing members 2A, 2B to the uprights 1A, 1B. Figure 1A illustrates the member 2A viewed in the direction of arrow A in Figure 1, and Figure 1B illustrates the member 2B viewed in the direction of the arrow B in Figure 1. Each of the members 2A, 2B is of I-shaped cross section, of which the stem of the I is formed by a central web 2C extending between outer perpendicular parallel flanges 2D. As can be seen from Figures 1A and 2, a right-angled bracket has one of its arms 7 secured, as by welding, to the front face of the upright 1A, so that its other arm 8 projects forwardly of that face and lies adjacent one side of the web 2C. From Figures 2 and 3, it can be seen that a similar bracket has one of its arms 9 secured to the opposite side of the web 2C, as by welding for example, so that its other arm 10 lies flush with the end of the member 2A, 2B and provides a surface for engagement against the outer face of the adjacent upright. By engaging the arm 10 in this manner against the upright and the arm 8 against the web 2C, the member 2A, 2B may be readily located in its correct position against the associated upright and secured to the upright by passing bolts 11 through the arm 8 and web 2C and further bolts 12 through the arm 10 and adjacent part of the associated upright. This arrangement not only facilitates assembly of the ground engaging members on the uprights, due to the locating action of the brackets, but also provides a very rigid prefabricated construction due to the two mutually perpendicular bolted connections.

The inner end portion of one of the arms 5 is illustrated in greater detail in Figure 3, to enable the means for connecting it releasably to the upright to be more clearly discerned. The arm 5 is provided, adjacent its end, with a pair of identical connecting elements 13, 14, each having corresponding pairs of mutually perpendicular arms 13A, 13B and 14A, 14B. Each connecting element includes a longitudinally projecting part 5A, to which the arms 13A, 13B; 14A, 14B are rigidly secured, the arms 13B, 14B extending at right angles to the associated part 5A and the arms 14A, 14B extending parallel to these parts.

The device 14 is rigidly fixed to the arm 5 by way of its projecting part 5A which extends generally parallel to the arm 5, the arm 14A being secured to the inner surface of the part 5A and the arm 13A extending at right angles thereto and spaced by a distance 'a' from the end of the arm 5.

The device 13 is pivotally connected to the arm 5 by way of a pivotal connection 15 formed between the free end of the part 5A and the arm 5. The pivotal connection is arranged so that the element 13 may be swung from its illustrated outward extreme position to a position corresponding to that of the fixed device 14, as will be explained hereafter.

The arm 5 is provided also with a locking device in the form of a wedge member 17 which, in use, lies against a rearwardly facing part 18 of the arm 5. A threaded opening 19 in the wedge member cooperates with a screw member 20 carried by the arm so that the wedge member, when assembled, may be moved in opposed directions perpendicular to the longitudinal direction of the arm 5 by rotating the screw 20.

As can be seen more clearly in Figures 4 and 5, the uprights 1A, 1B as illustrated in their preferred form, are of I-shaped cross-section, but may be of any convenient cross-section which provides a pair of opposed longitudinally extending co-planar flanges 21. In order to assemble the load bearing arm 5 on the upright 1A, 1B, the connecting element 13 is swung outwardly to or towards the extreme position shown in broken lines in Figure 4, enabling the arm to be positioned with one of the flanges 21 lying in a gap 'a' between the arm 14B of the connecting element 14 in its inwardly swung extreme position and the inner end of the arm 5. The size of the gap 'a' is somewhat greater than the thickness of the flanges 21 of the upright 1A, 1B. The connecting element 13 is then swung back to its position illustrated in full lines with the arm 13B thereof lying parallel to the arm 14B against the other flange 21. The screw 20 is then rotated in a direction such as to draw the wedge 17 upwardly between the surface 18 of the support arm 5 (Figure 5) and the common outer face of the flanges 21 so as rigidly to wedge the support arm in a cantilever position relative to the upright. As can be seen more clearly from Figure 5, the wedge 17 extends by a substantial distance beyond the lower extremity of the arm 5 so as to provide an extended support surface against the upright. This has the effect of increasing the rigidity of the assembly and, to some extent, the load bearing capacity of the support arm 5. In practice, the arm 1A, 1B would be inclined upwardly at about 3° when unloaded, becoming approximately horizontal under maximum load.

Figure 6 illustrates a modification to the outer end of the support arm 5. An upwardly extending bar 25 or the like is secured to the arm by suitable means such as bolting or welding and serves as a stop to retain articles on the arm.

An alternative form of step is illustrated in Figure 7, being rigidly secured to the outer end portion of the arm 5, and having an upright wall 28 joined to an inclined portion 29, terminating in a rolled back portion 30. The portion 30 can be reinforced by an end plate 31 secured to the arm and a side guard 32 is provided as a safety measure. This arrangement is particularly useful when the support system of the invention is used for storing drums, as of electric cable for example, having outwardly extending central spigots and facilitates the loading of such drums onto the support system by means of a fork lift truck. The truck can drive between the uprights and support arms with a cable drum supported across the forks of the truck and move forwardly until the spigots on the drum contact the respective upright portions 28 on each arm 5. Upon lowering the forks, the drum spigots are allowed to roll down the inclined surfaces 29 and engage within the rolled over portions 30 in which they are retained to hold the drum in position on the arms. The portions 30 may, if desired, be rolled over to a slightly over-centre position to prevent the spigots being dislodged from the portions 30 in the event of vertical shocks applied thereto.

It will be seen that the invention provides a load support system of robust construction which is better adapted for supporting heavy loads than some conventional systems and is simple and convenient to assemble. Since load is transmitted from the support arms to the uprights via the relatively large surface afforded by the wedges, the system of the invention is subject to less rapid wear and deterioration than some conventional systems. The various components of the system may differ from those described and, in particular the wedge may be of any convenient form and be arranged to move in a direction different from that illustrated. In an alternative arrangement, wedging surfaces may be provided on the uprights and support arms and cooperate with any suitable locking means. It will be understood that the invention may be applied to a support system having only a single support arm.

## Claims

1.  A load support system comprising a generally horizontal support arm (5) connected to an upright (1A, 1B) by connecting means (6), characterised in that the connecting means includes a first part (13, 14) arranged to engage a first surface (21) of the upright (1A, 1B), and a second part (17) movable to engage between a second surface of the upright opposed to said first surface and a surface (18) fixed relative to the arm (5), such as to effect a wedge action between said second and fixed surfaces to lock the arm firmly on the upright.

2.  A system according to Claim 1, characterised in that said second part is in the form of a separate wedge component (17) movable into and out of a wedging position.

3.  A system according to Claim 1, characterised in that a drive device (20) is provided to move the wedge component (17) into and out of said wedging position.

4.  A system according to Claim 3, characterised in that said drive device is a screw (20) threadedly engaged with the wedge component (17).

5.  A system according to any one of Claims 2 to 4, characterised in that said wedge component (17) is dimensioned so that, when in its wedging position it extends downwardly along said second surface of the upright (1A, 1B) to a position substantially below the underside of the connected arm.

6.  A system according to any one of the preceding claims, characterised in that a portion (13, 5A) of said first part (13, 14) of the connecting means (6) is movable relative to the remainder thereof to facilitate engagement of the connecting means with said first surface (21) of the upright (1A, 1B).

7.  A system according to Claim 6, characterised in that said portion (13, 5A) of said first part (13, 14) is pivotally attached to the arm for swinging movement into and out of its engaging position relative to said first surface (21).

8.  A system according to Claim 2, characterised in that the first part of the connecting means comprises a pair of arms (5A), one of which projects beyond the inner end of the support arm (5) and is rigidly fixed to the support arm, the other arm (5A) being pivotally connected to the support arm (5) for swinging movement between extreme positions, of which a first corresponds to that of the fixed arm and in the second of which it extends generally transversely of the support arm, the arms (5A) having respective flanges (13B, 14B) which, with the pivotable arm in said first position, are generally coplanar and spaced from the end of the support arm, the arrangement being such that, with the pivotable arm (5A) swung to its transverse position, the support arm is offered to the upright in cantilever relationship with the upright flange 21 lying between the fixed flange (14B) and the adjacent end of the support arm (5), whereupon the pivotable arm (5) is swung to its first position corresponding to the fixed arm so that the flange (21) lies between the fixed flange (13B) and said end of the support arm, the wedge component (17) then being introduced between opposing surfaces of the upright flange (21) and the adjacent flanges (13B, 14B) to lock the support arm on the upright.

9.  A system according to any one of the preceding claims, wherein the free end of the support arm (5) is provided with a stop (25, 27) serving to retain articles on the arm.

10. A system according to Claim 9, wherein the stop comprises a first flange (28) spaced inwardly from the free end of the arm and connected by an inclined slope (29) to a loop formation (30) adapted to receive an outwardly extending central spigot of a storage drum which may be first located by contact with the flange (28) and then allowed to roll along the slope (29) until engaged within the loop (30).

11. A load support system comprising an elongate ground-engaging member (2A, 2B) secured to the lower end portion of an upright (1A, 1B), characterised in that the upright is provided with mutually perpendicular surfaces (1B, 8) respectively in planes extending along the upright, means (11, 12) being provided to connect the upright and said member together with corresponding surfaces (10, 2C) on said member engaged with said mutually perpendicular surfaces of the upright.

12. A system according to Claim 11, characterised in that one of said mutually perpendicular surfaces is on a cleat (8) extending from a front surface of the upright in a direction longitudinally of the ground engaging member, part of such front surface serving as the other of said mutually perpendicular surfaces and being engaged by a further cleat (10) extending transversely of said member and flush with the adjacent end of the latter.

FIG 1

FIG 1A

FIG 1B

FIG 3

FIG 6

FIG 7

FIG 4

FIG 5

FIG 2